# EUROPEAN PATENT APPLICATION

(11) **EP 3 482 828 A1**
(43) Date of publication of application: **15.05.2019**
(21) Application number: 17200649.6
(22) Date of filing: 08.11.2017
(51) Int. Cl.: B01L 3/02, B01L 3/00

(54) **METHODS AND APPARATUS FOR ADDING OR REMOVING MATERIAL FROM A MICROFLUIDIC ARRANGEMENT**

(71) Applicant: Oxford University Innovation Ltd., Oxford, Oxfordshire OX2 0JB (GB)
(72) Inventor: WALSH, Edmond, Osney Mead, Oxford, OX2 0ES (GB)
(74) Representative: J A Kemp

(57) **Abstract**

Methods and apparatus for adding or removing material from a microfluidic arrangement are disclosed. The microfluidic arrangement may comprise a plurality of bodies of a first liquid held in shape by surface tension on a substrate. A second liquid covers the bodies of first liquid. A port is scanned along a scanning path. Material is added via the port to plural bodies of the first liquid without changing their footprints during a segment of the scanning path. Alternatively, material is removed via the port from plural bodies of the first liquid without changing their footprints during a segment of the scanning path. The port is moved through a range of positions exclusively at a constant distance from the substrate during each segment of the scanning path.

## Description

The invention relates to adding or removing material from microfluidic arrangements.

Manipulation of small volumes of liquids is central to many scientific disciplines, including microbiology, cell biology, biochemistry, and materials science.

Adding and removing material from microfluidic arrangements is time consuming and can be unreliable. Sealing arrangements may be needed between channels or reservoirs of the device and external pumping apparatus. The sealing arrangements are typically small and difficult to manipulate, as well as being unreliable. Experiments can be compromised due to contamination, leakage, bubbles and/or unpredictable flow rates. Fluid can only be injected and extracted at specific points in the device, limiting flexibility.

Access can be easier where the microfluidic arrangement simply comprises an array of wells, but adding or removing material is still time consuming because of the need to bring a needle to an appropriate position accurately above each well to add or remove material from the well. It is difficult to prevent air bubbles in the well interfering with these processes for high density well plates (e.g. having wells with diameters less than about 3 mm).

It is an object of the invention to provide improved methods and apparatus for adding or removing material from microfluidic arrangements.

According to an aspect of the invention, there is provided a method of adding material to a microfluidic arrangement or a method of removing material from a microfluidic arrangement, wherein: the microfluidic arrangement comprises a plurality of bodies of a first liquid, each body held in shape predominantly by surface tension on a surface of a substrate, and a second liquid, immiscible with the first liquid, in direct contact with the bodies of first liquid and a portion of the surface of the substrate outside of the bodies of first liquid, covering the bodies of first liquid, and isolating each body of first liquid from each other body of first liquid; and the method comprises: scanning a port along a scanning path during which: material is added via the port to each of at least a subset of said plurality of bodies of the first liquid, without changing the shape or size of a footprint on the surface of the substrate of the body of first liquid, during a segment of the scanning path proximate to the body of first liquid, the segment extending from a position of the port before material starts to be added to the body of first liquid to a position of the port after material has finished being added to the body of first liquid; or material is removed via the port from each of at least a subset of said plurality of bodies of the first liquid, without changing the shape or size of a footprint on the surface of the substrate of the body of first liquid, during a segment of the scanning path proximate to the body of first liquid, the segment extending from a position of the port before material starts to be removed from the body of first liquid to a position of the port after material has finished being removed from the body of first liquid, wherein the port is moved through a range of positions that are exclusively at a constant distance from the surface of the substrate during each said segment of the scanning path.

Thus, a method is provided in which material is added to or removed from a microfluidic arrangement in which bodies of first liquid are held in desired shapes without solid walls. Surface tension is used to allow liquid walls instead of solid walls to hold the bodies in shape and isolate them from each other. A port can be introduced into the microfluidic arrangement in a self-sealing manner. A seal with respect to the environment is automatically established when the port is inserted into the second liquid and closes behind the port when the port is removed. When the second liquid is denser than the first liquid, any material detached from one body of first liquid without being pumped away will rise to the upper surface of the second liquid and cannot therefore contaminate any neighbouring body of first liquid. The risk of contamination is reduced or eliminated; the risk of seal failure or leakage is reduced. If bubbles of gas arise they will be forced up and out of the microfluidic arrangement pattern by buoyancy forces, thereby eliminating also the negative effects of bubbles that are regularly encountered in PDMS-based devices and existing high density well plates where bubbles are held in place due to interfacial forces with the physical walls.

The provision of a scanning path that remains at a constant distance from the substrate while passing near to each body to which material is to be added or removed reduces the complexity of the overall range of port movements needed to add and/or remove material from a plurality of bodies using the same port. Processing of multiple ports can thus be performed more quickly, more reliably and/or using cheaper and/or more compact apparatus. The inventors have found that the absence of solid walls separating different bodies of the first liquid, as would be present in traditional microwell plates, enables highly efficient addition and/or removal of material from bodies of the first liquid even without movement of the port vertically towards or away from individual bodies during the scanning.

In an embodiment, material is simultaneously added to multiple bodies of first liquid during each of one or more of the segments of the scanning path. This may be achieved for example by arranging for the segment of the scanning path to comprise a continuous series of points that are all equidistant between the multiple bodies of the first liquid to which material is to be added in the segment.

In an embodiment, material is simultaneously removed from multiple bodies of first liquid during each of one or more of the segments of the scanning path. This may be achieved for example by arranging for the segment of the scanning path to comprise a continuous series of points that are all equidistant between the multiple bodies of the first liquid from which material is to be removed in the segment.

Arranging to add or remove material simultaneously to multiple bodies in this way can reduce the total length of the scanning path needed to process all of the bodies.

In an embodiment, the material is pumped out of the port, continuously and without interruption, optionally at a constant rate, for the whole duration of the scanning of the port through a plurality of the segments of the scanning path. Pumping material continuously facilitates cost-effective, reliable and/or compact implementation of the pumping, as well as facilitating high speed scanning over, and thus addition of material to, the bodies. It is no longer necessary to stop and start pumping, which saves time. Where pumping is stopped and started, flex in the system (e.g. due to tubing, gas components, liquid compressibilities, etc.) means that longer periods are needed in between each stop/start to ensure that the correct volume of material is added or removed from each body of liquid. Furthermore, continuous pumping can lower stress on sensitive materials by avoiding unnecessary accelerations and decelerations, and forces associated therewith. The inventors have found that, despite the continuous pumping, liquid bridges sequentially form and break to allow the material to be added to the plurality of the bodies without compromising the isolation of each body from each other body.

In an embodiment, the material is sucked into the port, continuously and without interruption, optionally at a constant rate, for the whole duration of the scanning of the port through a plurality of the segments of the scanning path. Sucking material continuously facilitates cost-effective, reliable and/or compact implementation of the pumping, as well as facilitating high speed scanning over, and thus removal of material from, the bodies. It is no longer necessary for example to provide apparatus to stop and start pumping at high speed. Furthermore, continuous pumping can lower stress on sensitive materials by avoiding unnecessary accelerations and decelerations, and forces associated therewith. This approach further advantageously forms an alternating sequence of first liquid globules and second liquid globules that are sucked into the port as the port moves sequentially between positions corresponding to bodies of the first liquid, where first liquid is sucked into the port, and positions in between bodies of the first liquid, where second liquid is sucked into the port, thereby creating a series of globules of the first liquid separated from each other in the port by globules of the second liquid. Samples of material in the bodies can therefore be extracted quickly and efficiently, with minimal stress to the samples, and in a manner which maintains isolation of different samples from each other.

In an embodiment, the scanning path is substantially straight. This facilitates rapid and reliable scanning.

In an embodiment, an electric field is generated in a region between the port and the surface of the substrate. The electric field is such as to promote (e.g. speed up) coalescence between material exiting the port and each of the bodies along the scanning path. The inventors have found that such generation of an electric field achieves a surprisingly large increase in the speed of coalescence (e.g. coalescence is achieved in millisecond time scales rather than requiring several seconds, which may be the case for some compositions of first liquid) for a wide range of electric field types and magnitudes. Increasing the speed of coalescence makes it possible for the scanning to be implemented more quickly.

According to an alternative aspect, there is provided an apparatus configured to add material to a microfluidic arrangement or an apparatus configured to remove material from a microfluidic arrangement, wherein: the microfluidic arrangement comprises a plurality of bodies of a first liquid, each body held in shape predominantly by surface tension on a surface of a substrate, and a second liquid, immiscible with the first liquid, in direct contact with the bodies of first liquid and a portion of the surface of the substrate outside of the bodies of first liquid, covering the bodies of first liquid, and isolating each body of first liquid from each other body of first liquid; and the apparatus comprises: a scanning device configured to scan a port over the substrate; either or both of: a dispensing system configured to pump material out of the port, and an extraction system configured to suck material into the port; and a controller configured to: control the scanning device so that the port is scanned along a scanning path; and either or both of: control the dispensing system to add material via the port to each of at least a subset of said plurality of bodies of first liquid, without changing the shape or size of a footprint on the surface of the substrate of the body of first liquid, during a segment of the scanning path proximate to the body of first liquid, the segment extending from a position before material starts to be added to the body of first liquid to a position after material has finished being added to the body of first liquid; and control the extraction system to remove material via the port from each of at least a subset of said plurality of bodies of first liquid, without changing the shape or size of a footprint on the surface of the substrate of the body of first liquid, during a segment of the scanning path proximate to the body of first liquid, the segment extending from a position before material starts to be removed from the body of first liquid to a position after material has finished being removed from the body of first liquid, wherein the controller is configured such that the port is moved through a range of positions that are exclusively at a constant distance from the surface of the substrate during each said segment of the scanning path.

According to an alternative aspect, there is provided a method of adding material to a microfluidic arrangement, wherein: the microfluidic arrangement comprises one or more bodies of a first liquid, each body held in shape predominantly by surface tension on a surface of a substrate, and a second liquid, immiscible with the first liquid, in direct contact with the one or more bodies of first liquid and a portion of the surface of the substrate outside of the one or more bodies of first liquid, wherein the second liquid covers the one or more bodies of first liquid, and, where a plurality of the bodies of first liquid are provided, the second liquid isolates each body of first liquid from each other body of first liquid; and the method comprises: adding material via a port to one or more of the bodies of first liquid; and generating an electric field in a region between the port and the surface of the substrate, the electric field being such as to promote coalescence between material exiting the port and the one or more bodies of first liquid.

According to an aspect, there is provided an apparatus configured to add material to a microfluidic arrangement, wherein: the microfluidic arrangement comprises one or more bodies of a first liquid, each body held in shape predominantly by surface tension on a surface of a substrate, and a second liquid, immiscible with the first liquid, in direct contact with the one or more bodies of first liquid and a portion of the surface of the substrate outside of the one or more bodies of first liquid, wherein the second liquid covers the one or more bodies of first liquid, and, where a plurality of the bodies of first liquid are provided, the second liquid isolates each body of first liquid from each other body of first liquid; and the apparatus comprises: a dispensing system configured to add material via a port to one or more of the bodies of first liquid; and an electric field generating device configured to generate an electric field in a region between the port and said surface of the substrate.

Embodiments of the invention will now be described, by way of example only, with reference to the accompanying drawings in which corresponding reference symbols indicate corresponding parts, and in which:
Figure 1 schematically depicts an apparatus for adding material to a microfluidic arrangement;
Figure 2 schematically depicts an apparatus for removing material from a microfluidic arrangement;
Figure 3 schematically depicts an apparatus for adding and removing material from a microfluidic arrangement;
Figure 4 is a schematic side sectional view of movement of a port along a scanning path;
Figure 5 is a schematic top view of a microfluidic arrangement showing movement of a port along a scanning path;
Figure 6 is a schematic top view of a microfluidic arrangement showing movement of a port along an alternative scanning path;
Figure 7 is a magnified view of a portion of the arrangement of Figure 6 illustrating addition of material to two bodies of first liquid simultaneously;
Figures 8-12 are schematic side sectional views of a microfluidic arrangement showing steps in a scanning path during which material is pumped continuously from a port; and
Figures 13-16 are schematic side sectional views of a microfluidic arrangement showing steps in a scanning path during which material is sucked continuously into a port.

The figures are provided for explanatory purposes only and are not depicted to scale in order to allow different elements to be visualised clearly. In particular, the bodies of the first liquid are depicted much larger relative to other elements of apparatus than would typically be the case in practice.

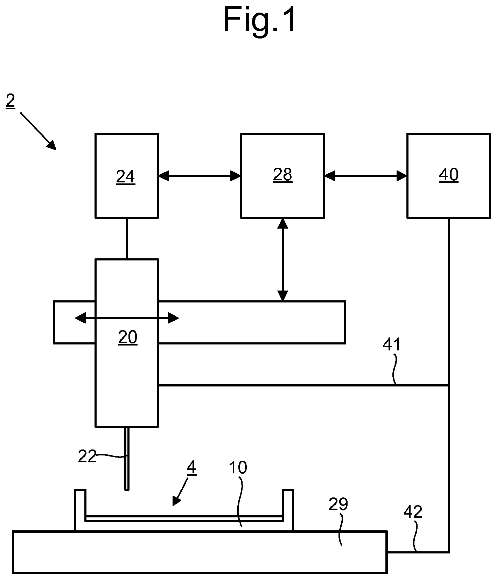

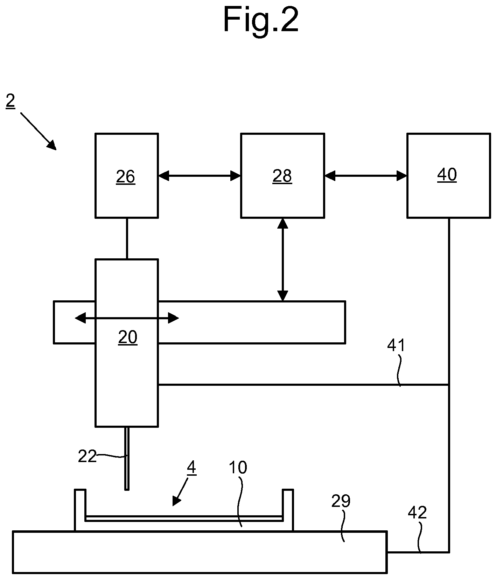

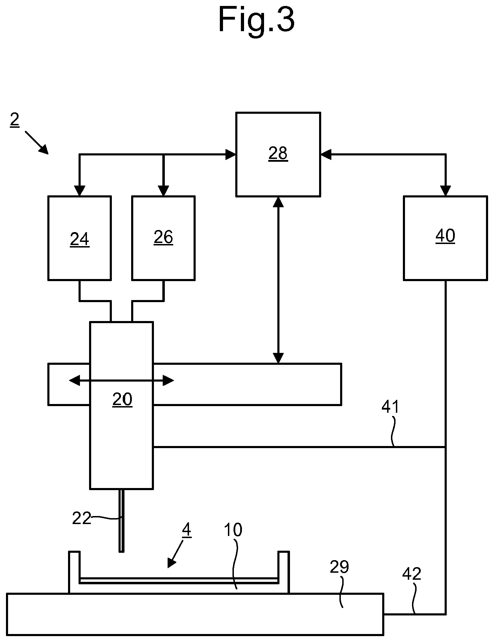

Figures 1-3 depict apparatus for adding and/or removing material from a microfluidic arrangement 4. The apparatus 2 shown in Figure 1 is configured to add material. The apparatus 2 shown in Figure 2 is configured to remove material. The apparatus 2 shown in Figure 3 is configured to add and remove material (typically at different times or at the same time in different regions of the microfluidic arrangement).

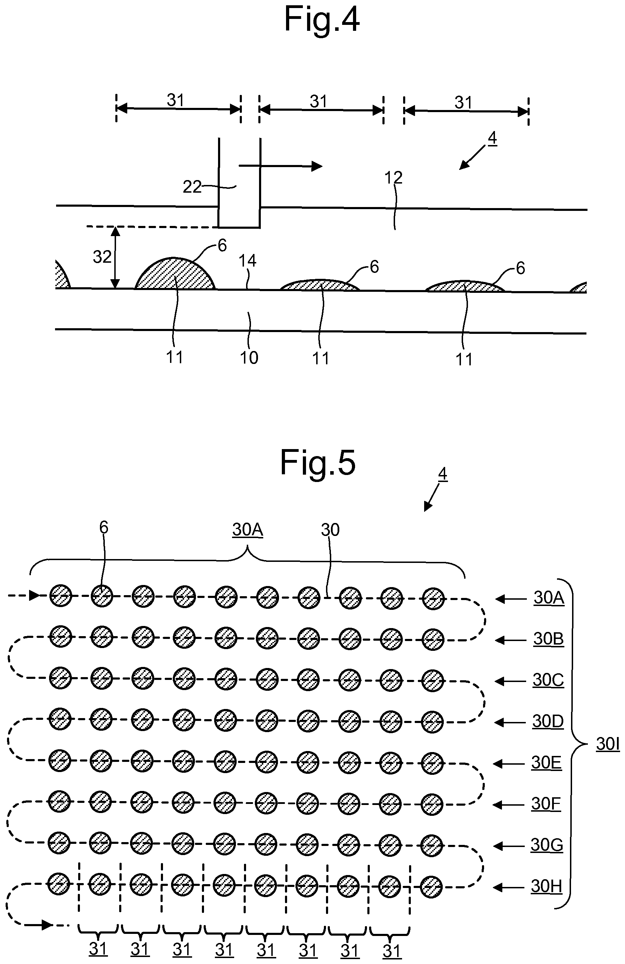

An example microfluidic arrangement 4 is depicted in Figures 4 and 5. The microfluidic arrangement 4 comprises a plurality of bodies 6 of first liquid 11. Each body 6 of first liquid 11 is held predominantly by surface tension on a surface 14 of a substrate 10. In the examples shown, the portion of the substrate surface underneath each body and immediately adjacent to each body 6 is planar and the shape of the body 6, apart from the lower planar extremity of the body 6, where the body 6 is in contact with the substrate, is determined predominantly by surface tension (rather than by solid walls of a well, as would the case in a traditional microwell plate). In an embodiment, the substrate surface spanning underneath a plurality of the bodies 6 is continuously planar underneath those bodies. In an embodiment, the substrate surface is continuously planar under all bodies 6 present on the substrate 10. Typically, the substrate surface will be substantially planar and unpatterned (neither mechanically nor chemically), at least in regions where the bodies 6 are provided. Patterning to locally modify surface energy characteristics (e.g. hydrophilicity) can, however, be provided.

A second liquid 12 is provided in direct contact with the bodies 6 of first liquid 11 and with a portion of the surface 14 of the substrate 10 outside of the bodies 1 of first liquid (i.e. outside of the footprints of the bodies 1 on the surface 14 of the substrate 10). The second liquid 12 covers the bodies 6. The second liquid 12 isolates each body 6 from each other body 6. Thus, second liquid 12 is present in a region between each body 6 and each other body 6. In an embodiment, the second liquid 12 is provided as a single continuous body of second liquid 12, such that every point in the second liquid 12 is connected to every other point in the second liquid 12 by a continuous path exclusively through second liquid 12. Typically, each of the bodies 6 of the first liquid 11 will be in contact exclusively with the surface 14 of the substrate 10 and the second liquid 12. The first liquid 11 in each body 6 is thus in contact with the substrate 10 on one side and with the second liquid 12 on all of the rest of an outer interface of the body 6. The second liquid 12 isolates the first liquid 11 from the surrounding environment (e.g. air). The second liquid 12 may therefore reduce or prevent evaporation of the first liquid 11. The second liquid 12 reduces or prevents contamination of the first liquid 11. The second liquid 12 is substantially immiscible with the first liquid 11. In an embodiment, the second liquid 12 is denser than the first liquid 11. In an embodiment, the first liquid 11 is aqueous.

The apparatus 2 comprises a scanning device 20 configured to scan a port 22 over the substrate 10. The scanning device 20 can be implemented in various ways known in the art of mechanical scanning. The scanning device 20 may for example comprise an electrical motor, one or more sensors for sensing a position of the port 22, and a gantry or other mounting arrangement for moveably mounting the port 22 so that it can be driven between different positions by the motor.

In embodiments, examples of which are shown in Figures 1 and 3, the apparatus 2 further comprises a dispensing system 24 for driving (e.g. pumping) material out of the port 22. The dispensing system 24 typically comprises a pumping system, one or more reservoirs for holding material or components of material to be dispensed via the port 22, and a suitable system of conduits and/or valves for conveying the material from the one or more reservoirs to the port 22. The nature of the material to be dispensed by the dispensing system 24 is not particularly limited, but will typically comprise a liquid comprising one or more components (which may themselves be liquid or may comprise small solid particles). The liquid component having the highest concentration in the material being dispensed may be the same as the liquid component having the highest concentration in the first liquid. The liquid component having the highest concentration may be water for example. The material being dispensed and the first liquid may therefore be aqueous. The material may comprise a liquid that is miscible with the first liquid and is not miscible with the second liquid.

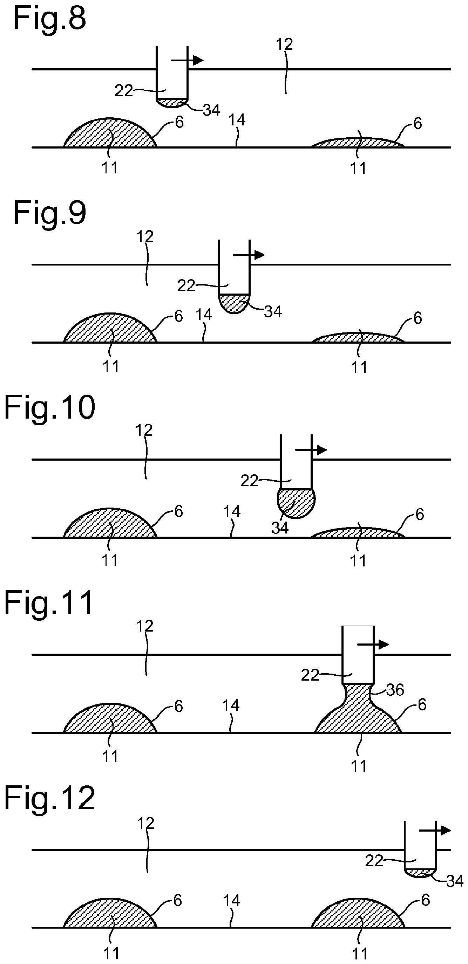

The port 22 may take various forms, but will typically be tubular and comprise an internal lumen for conveying material to or from a distal end where material can enter or leave the port 22. The port 22 may be configured such that a selected portion of the outer surface of the port 22 proximate to the distal end of the port 22 has a surface energy density that is higher in respect of contact with the first liquid 11 than in respect of contact with the second liquid 12. It is therefore energetically more favourable for the second liquid 12 to wet the selected portion of the port 22 than for the first liquid 11 to wet the selected portion of the port 22. In the case where the first liquid 11 contains a high proportion of water, the selected portion may be configured to be hydrophobic for example. Configuring the port 22 in this way prevents unwanted wetting of the port 22 by liquid leaving the distal end, thereby promoting for example reliable formation of a globule that protrudes towards substrate 10, as depicted for example in Figures 8-10. In an embodiment, the selected portion forms a closed ring around the port 22. The selected portion may comprise an end surface of the port 22, a side surface of the port 22, or both. The selected portion may comprise a region that is directly adjacent to the distal end of the port 22. The selected portion may be partially or completely implemented by treating a surface of the port 22, for example by coating, or by providing a port 22 comprising an inner element and a sleeve over the inner element, wherein an outer surface of the sleeve provides the selected portion. In an embodiment, the port 22 comprises a stainless steel inner element and a PTFE sleeve or coating over the inner element.

In embodiments, examples of which are shown in Figures 2 and 3, the apparatus 2 further comprises an extraction system 26 for sucking material into the port 22. The extraction system 26 typically comprises a pumping system, one or more reservoirs for receiving material extracted via the port 22, and a suitable system of conduits and/or valves for conveying material from the port 22 to the one or more reservoirs.

The apparatus 2 further comprises a controller 28. The controller 28 controls the scanning device 20 (e.g. by controlling an electrical motor while receiving input from one or more sensors sensing the position of the port 22) so that the port 22 is scanned along a scanning path 30. The port 22 may be moved continuously and without interruption along the whole of the scanning path 30, optionally at a constant speed along the whole of the scanning path 30. Alternatively, the port 22 may stop and start along the scanning path 30 or be scanned at a varying speed.

Portions of an example scanning path 30 are shown in Figures 4 and 5. In an embodiment, the scanning path 30 comprises a plurality of segments 31. Example segments 31 are labelled in Figures 4-7.

In embodiments of the type depicted in Figures 1 and 3, the controller 28 controls the dispensing system 24 to add material via the port 22 to each of at least a subset of the plurality of bodies 6 of first liquid 11 present on the substrate 10. The material is added without changing the shape or size of a footprint on the surface 14 of the substrate 10 of the body 6 of first liquid 11. The footprint is defined by the line on the surface 14 marking the boundary between the first liquid 11 and the second liquid 12 outside of the body 6. The footprint is pinned by interfacial forces. Typically, each body 6 of first liquid 11 will be relatively flat before material is added and will grow in height when material is added without any change in the footprint. In other words, the angle at a point on the surface 14 at the edge of the footprint of a body 6 where the first liquid 11 contacts the second liquid 12 is below the advancing contact angle of the first liquid 11 both before and after addition of first liquid 11. The material is added during a segment 31 of the scanning path 30 proximate to the body 6 of first liquid 11. The segment 31 extends from a position before material starts to be added to the body 6 of first liquid 11 to a position after material has finished being added to the body 6 of first liquid 11. An example such segment 31 would extend along the scanning path 30 from the position of the port 22 shown in Figure 10 (discussed below) to the position of the port 22 shown in Figure 12 (discussed below), or as indicated in Figure 4.

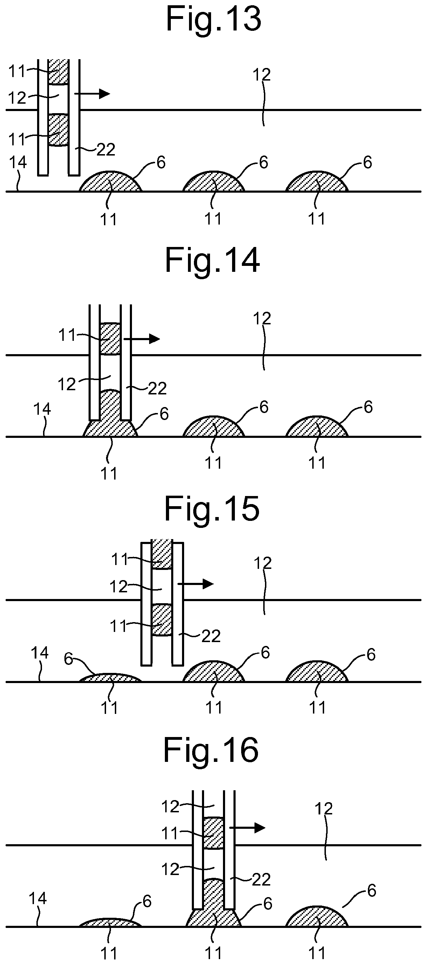

In embodiments of the type depicted in Figures 2 and 3, the controller 28 controls the extraction system 26 to remove material via the port 22 from each of at least a subset of said plurality of bodies 6 of first liquid 11. The material is removed without changing the shape or size of a footprint on the surface 14 of the substrate 11 of the body 6 of first liquid 11. The removal of material reduces a contact angle of the body 6 of first liquid 11 relative to the substrate surface 14, but the contact angle does not reach the receding contact angle, so the footprint does not become smaller. The material is removed during a segment 31 of the scanning path 30 proximate to the body 6 of first liquid 11. The segment 30 extends from a position before material starts to be removed from the body 6 of first liquid 11 to a position after material has finished being removed from the body 6 of first liquid 11. An example such segment 31 would extend along the scanning path 30 from the position of the port 22 shown in Figure 13 (discussed below) to the position of the port 22 shown in Figure 15 (discussed below).

In each case (i.e. whether material is being added or removed), the port 22 is moved through a range of positions that are exclusively at a constant distance 32 from the surface 14 of the substrate 10 during each segment 31 of the scanning path 30. Thus, in the side view of Figure 4, the port 22 would be moved horizontally to the right while the distance 32 between the port 22 and the substrate surface 14 remains constant, at least while scanning through any individual one of the segments 31. In the case where the surface 14 of the substrate 10 is horizontal, which will be the case in many implementations, the height of the port 22 would be held constant during each of the segments 31 (and, optionally, during the whole scanning path 30). In the case where the surface 14 of the substrate 10 is slightly curved, the scanning path 30 may follow the curvature of the surface 14. Thus, the absolute height of the port 22 from one segment 31 of the scanning path 30 to the next segment 31 of the scanning path 30 may gradually change to accommodate the curvature and maintain the constant distance 32 between the port 22 and the surface 14 of the substrate 10.

An example scanning path 30 depicting many segments 31 (one segment 31 for each body 6 being processed in this example) is depicted from above (perpendicular to the surface 14) in Figure 5. The scanning path 30 in this example intersects plural bodies 6 when viewed perpendicularly to the surface 14 of the substrate 10. When adding material to the bodies 6, the port 22 will typically not itself come into direct contact with any of the bodies 6 (except possibly via a liquid bridge, as discussed below). Thus, the constant distance 32 during each segment 31 of the scanning path 30 may be larger than a height relative to the surface 14 of the substrate 10 of any body 6 of the first liquid 11 to which material is added during the segment 31. This may reduce the risk of cross-contamination between different bodies 6. This is not essential, though: the constant distance 32 could be lower than the height of the bodies 6 when adding material. When removing material from the bodies 6, the port will typically be lower than the height of the bodies 6. Thus, the constant distance 32 during each segment 31 of the scanning path 30 may be smaller than a height relative to the surface 14 of the substrate 10 of any body 6 of the first liquid 11 from which material is removed during the segment 31. This is not essential, though: the constant distance 32 could be higher than the height of the bodies 6 when removing material, if the suction provided is sufficiently large and the difference in height not too great. This may reduce the risk of cross-contamination between different bodies 6.

In embodiments, the scanning path 30 is such that a distal end of the port 22 remains below an upper surface of the second liquid 12, thereby remaining sealed from an environment above the second liquid 12 during scanning along the scanning path 30. In an embodiment, the constant distance is the same for all of the segments of the scanning path. This allows the port 22 to be scanned smoothly and quickly, with minimal risk of damage to the microfluidic arrangement or to material added or removed to/from the microfluidic arrangement. In other embodiments, the constant distance varies between different segments. This may be used to allow for different heights of body 6, for example to ensure that the same volume of material is added to or removed from bodies 6 that are initially of different heights, or it may be used to controllably and efficiently add or remove different amounts of material to/from bodies 6 that are initially of the same height (or different heights).

Apart from the requirement to maintain the constant distance 32 during each segment 31, the scanning path 30 may take various forms, depending on the particular needs of the application in question and the layout of the bodies 6. In one embodiment, the scanning path 30 is substantially straight. A straight line path is an efficient way of scanning through bodies 6 that are aligned with each other along the straight line (or parallel to the straight line), and makes particularly efficient use of the benefit of embodiments of the present disclosure of not needing to move the port 22 vertically up and down relative to the surface 14 in between different bodies 6 of the first liquid 11. An example of such scanning paths 30A-30H are depicted in Figure 5. In this particular example, eight straight scanning paths 30 are depicted. The eight scanning paths may be scanned one after the other to form a longer scanning path 301. The longer scanning path 30I is an example of a serpentine scan.

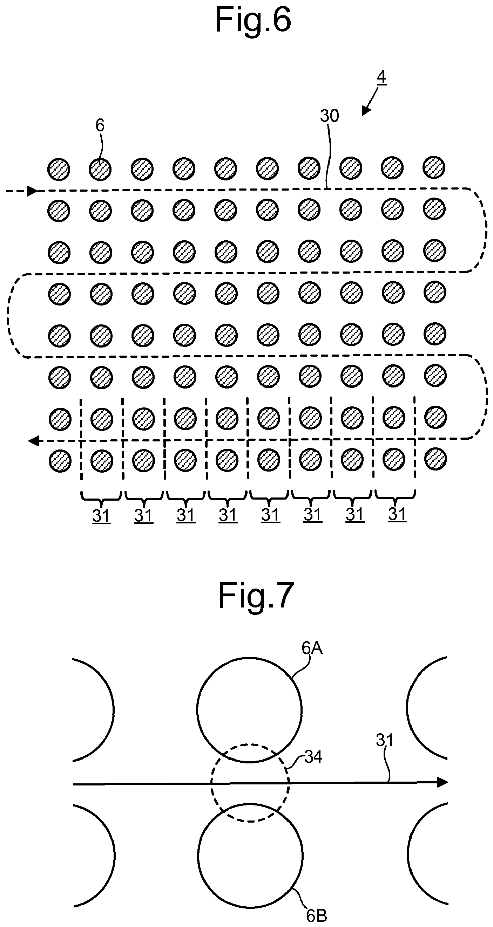

According to embodiments, the material is added to or removed from a single one of the bodies 6 of first liquid 11 during each segment 31 of the scanning path 30. The scanning path 30 shown in Figure 5 is an example of this type. The scanning path 30, viewed along a direction perpendicular to the surface 14 as in Figure 5, intersects each body 6 of first liquid 11 through the middle of the body 6 (e.g. by passing directly over). In other embodiments, material is simultaneously added to multiple bodies 6 of first liquid 11 during each of one or more of the segments 31 of the scanning path 30. In other embodiments, material is simultaneously removed from multiple bodies 6 of first liquid 11 during each of one or more of the segments 31 of the scanning path 30. An example scanning path 30 suitable for operating in either of these ways (i.e. for simultaneously adding material or simultaneously removing material) is depicted in Figure 6. Here, the scanning path 30 is such that each segment 31 of the scanning path 30 comprises a continuous series of points that are all equidistant from the two bodies 6 of first liquid 11 to which material is to be added simultaneously in each segment 31 or from which material is to be removed simultaneously in each segment 31. An example such segment 31 is depicted in Figure 7. By scanning along a line that is midway between each horizontal line of bodies 6 shown in Figure 6, segments are provided that pass symmetrically through a region of closest approach between pairs of bodies 6, as shown in Figure 7. When the port 22 reaches the position of closest approach material may be added or removed from the two bodies in the pair at substantially the same time. An outline of an example globule 34 leaving the port 22 is depicted in broken lines to illustrate how a growing globule 34 coming out of the port 22 may be made to contact both of the bodies 6 at the same time. This approach makes it possible to reduce the overall length of the scanning path 30 necessary to process (i.e. add material to or remove material from) a given set of bodies 6 of first liquid. In the case of the examples shown in Figures 5 and 6 the overall length of the scanning path 30 is roughly halved.

In a further embodiment, the scanning path 30 may be arranged to extend along a line that is orientated obliquely relative to a line of bodies 6 with which the port 22 is to interact. This approach allows, for example, progressively different amounts of material to be added efficiently to a sequence of the bodies 6 (i.e. more material will be added to bodies 6 that are closer to a centre of the scanning path 30 than to bodies 6 that are further away from the scanning path 30), which may be useful for example for creating a dilution series.

In an embodiment, material is pumped out of the port 22, continuously and without interruption, for the whole duration of the scanning of the port 22 through a plurality of the segments 31 of the scanning path 30. Optionally, the material is pumped out of the port 22 at a constant rate for the whole duration of the scanning of the port 22 through the plurality of the segments 31 of the scanning path 30. In an embodiment, the port 22 is moved at a constant speed for the whole duration of the scanning of the port 22 through the plurality of the segments 31 of the scanning path 30.

Figures 8-12 depict a sequence of consecutive stages in an example method in which material is pumped continuously and without interruption from the port 22. The port 22 is scanned from a first body 6 (on the left) to a second body 6 (on the right) along the scanning path 30. As can be seen in Figures 8-10, continuous pumping of material out of the port 22 leads to a liquid globule 34 of the material expanding gradually from the port 22 as the port 22 is scanned between the first body 6 and the second body 6. The globule 34 thus expands from the port during time periods in which the port 22 is moving through positions where no material is being added via the port 22 to any body 6 of first liquid 11. The expansion of the globule 34 is such that the globule 34 bridges a gap that would have existed in the absence of the globule 34 between the port 22 and the second body 6 when the port 22 reaches the second body 6, thereby forming a liquid bridge 36 allowing material from the port 22 to enter the second body 6 (as depicted in Figure 11). Thus, the expansion is such that the globule 34 bridges a gap that would have existed in the absence of the globule 34 between the port 22 and a body 6 of first liquid 11 while the port 22 is moving through positions where material is being added to that body 6 of first liquid 11. When the port 22 moves beyond the second body 6 the liquid bridge 36 is broken (before the port 22 reaches the next body 6) and the process begins again (Figure 12).

In embodiments in which material is sucked into the port 22, the material is sucked, continuously and without interruption, during the whole duration of the scanning of the port 22 through a plurality of the segments 31 of the scanning path 30. Optionally, a suction force applied in the port 22 is substantially constant during this time, such that a flow rate into the port 22 is substantially constant. In an embodiment, the port 22 is moved at a constant speed for the whole duration of the scanning of the port 22 through the plurality of the segments 31 of the scanning path 30.

Figures 13-16 depict a sequence of consecutive stages in such a process while the port 22 is scanned between positions corresponding to different bodies 6 of the first liquid. In this embodiment, the height of the port 22 is less than the height of each body 6. The process is such that an alternating sequence of first liquid globules and second liquid globules are sucked into the port 22, during the scanning of the port 22 through the plurality of segments 31 of the scanning path 30, as the port 22 moves sequentially between positions corresponding to bodies of first liquid 11. The port 22 sucks first liquid 11 into the port when positioned over a body 6 of the first liquid (as shown in Figures 14 and 16). The port 22 sucks second liquid 12 into the port 22 when positioned in between bodies 6 of first liquid 11 (as shown in Figures 13 and 15). A series of globules of the first liquid 11 separated from each other in the port 22 by globules of the second liquid 12 is thereby formed.

Each first liquid globule in the series is taken from a different body 6 and may therefore potentially have a different composition. It is possible to perform this process in reverse to selectively add globules of different composition to different bodies 6 of first liquid 11. Thus, for example, the method depicted in Figures 8-12 could be modified so that the material being added to each body 6 is potentially different for two or more of the bodies 6 by pumping an appropriately ordered sequence of first liquid globules out of the port 22 with appropriate timing (so that each first liquid globule is forced out of the port 22 with a timing that is appropriate for it to enter the desired body 6 of first liquid 11). Thus, the port 22 may contain an alternating sequence of first liquid globules separated from each other by a third liquid during the pumping. The third liquid is miscible with the second liquid or has substantially the same composition as the second liquid. Each first liquid globule optionally contains different components suspended or dissolved within the first liquid relative to at least one other first liquid globule. Material is pumped out of the port in such a manner that a different one of the first liquid globules is pumped into each of the plurality of segments of the scanning path.

In an embodiment, the apparatus 2 further comprises an electric field generating device 40 that generates an electric field in a region between the port 22 and the substrate 10. The electric field is such as to promote (e.g. speed up) coalescence between material exiting the port 22 and, when appropriately positioned beneath the port 22, each of the plurality of bodies 6 along the scanning path 30. In an embodiment, the electric field comprises an alternating electric field in the region between the port 22 and the substrate 10. In embodiments, the electric field generating device 40 is controlled by the controller 28 (e.g. as depicted in Figures 1-3). In an embodiment, the electric field generating device 40 generates the electric field via an electrical connection 41 to the probe 22 and an electrical connection 42 to an electrically conductive table 29 (or portion thereof) supporting the substrate 10.

Without wishing to be bound by theory, it is believed that the electric field promotes coalescence by causing movement of components (e.g. surfactants/molecules/proteins/charged particles) within the material being added to the bodies 6 and/or of components within the bodies 6 that reduces the stability of interfaces that would otherwise resist coalescence (because the components form a layer that slows down or stops the merging process).

The generation of an electric field in the region between the port 22 and the substrate 10 is useful in the context of the above embodiment where the port 22 is scanned over a plurality of bodies 6 at a constant separation from the substrate 10. The generation of an electric field is useful more generally, however, and can advantageously be applied to any situation where material is being added to a microfluidic arrangement via a port 22 and where rapid coalescence is required between material leaving the port 22 and the microfluidic arrangement 4. The method can be applied for example to any microfluidic arrangement 4 that comprises one or more bodies 6 of a first liquid 11 held in shape predominantly by surface tension on a locally planar surface 14 of a substrate 10, in which a second liquid 12 is in direct contact with the one or more bodies 6 of the first liquid 11, and wherein the second liquid covers the one or more bodies 6 of the first liquid 11. Where a plurality of the bodies 6 of the first liquid 11 are provided, the second liquid 12 may isolate each body 6 of first liquid 11 from each other body 6 of first liquid 11, as in the embodiments described above. The port 22 can be scanned relative to the microfluidic arrangement 4 but need not necessarily be scanned at a constant distance from the substrate 10 as in the above embodiments.

In any of the above embodiments, the second liquid 12 may be denser than the first liquid 11. In an embodiment, the first liquid 11 is aqueous and the second liquid 12 is denser than water. In an embodiment, the second liquid 12 comprises a fluorocarbon such as FC40 (a transparent fully-fluorinated liquid of density 1.855 g/ml that is widely used in droplet-based microfluidics). In an embodiment, the substrate 10 comprises a plastic such as polystyrene. Somewhat counter-intuitively, instead of the denser second liquid 12 sinking to the bottom and displacing the first liquid 11, interfacial forces dominate and the aqueous phase remains stuck to the substrate 10. The solubility of water in FC40 is <7 ppm by weight, so an aqueous first liquid 11 overlaid with a second liquid 12 comprising FC40 exposed to air above the FC40 is stable for days. FC40 has also been shown to isolate the individual bodies 6 of the first liquid 11 effectively from other bodies 6 of first liquid that are provided nearby, for example on the same substrate 10 and in contact with the same body of second liquid 12 but not in direct contact with each other.

In an embodiment, the first liquid 11, second liquid 12 and substrate 10 are selected such that an advancing contact angle of the first liquid 11 on the substrate 12 is higher when the bodies 6 of first liquid 11 are overlaid with the second liquid 12 than if the bodies 6 were overlaid with air. This is the case for example when the first liquid 11 is aqueous, the second liquid 12 is FC40, and the substrate 10 is polystyrene. In this case the advancing contact angle is increased by about 20°, meaning that about 60% more liquid can be added to bodies 6 before the body 6 footprint changes (i.e. spreads over the substrate).

Embodiments are described in below numbered clauses:
1. A method of adding material to a microfluidic arrangement or a method of removing material from a microfluidic arrangement, wherein:
   the microfluidic arrangement comprises a plurality of bodies of a first liquid, each body held in shape predominantly by surface tension on a surface of a substrate, and a second liquid, immiscible with the first liquid, in direct contact with the bodies of first liquid and a portion of the surface of the substrate outside of the bodies of first liquid, covering the bodies of first liquid, and isolating each body of first liquid from each other body of first liquid; and
   the method comprises:
      scanning a port along a scanning path during which:
         material is added via the port to each of at least a subset of said plurality of bodies of the first liquid, without changing the shape or size of a footprint on the surface of the substrate of the body of first liquid, during a segment of the scanning path proximate to the body of first liquid, the segment extending from a position of the port before material starts to be added to the body of first liquid to a position of the port after material has finished being added to the body of first liquid; or
         material is removed via the port from each of at least a subset of said plurality of bodies of the first liquid, without changing the shape or size of a footprint on the surface of the substrate of the body of first liquid, during a segment of the scanning path proximate to the body of first liquid, the segment extending from a position of the port before material starts to be removed from the body of first liquid to a position of the port after material has finished being removed from the body of first liquid,
         wherein the port is moved through a range of positions that are exclusively at a constant distance from the surface of the substrate during each said segment of the scanning path.
2. The method of clause 1, wherein said constant distance during each segment of the scanning path is larger than a height relative to the surface of the substrate of any body of the first liquid to which material is added during the segment.
3. The method of clause 1, wherein said constant distance during each segment of the scanning path is less than a height relative to the surface of the substrate of any body of the first liquid from which material is removed during the segment.
4. The method of any preceding clause, wherein:
   material is added to a single one of the bodies of first liquid during each segment of the scanning path; or
   material is removed from a single one of the bodies of first liquid during each segment of the scanning path.
5. The method of any of clauses 1-3, wherein:
   material is simultaneously added to multiple bodies of first liquid during each of one or more of the segments of the scanning path; or
   material is simultaneously removed from multiple bodies of first liquid during each of one or more of the segments of the scanning path.
6. The method of any preceding clause, wherein said constant distance is the same for all of the segments of the scanning path.
7. The method of any preceding clause, wherein the material is pumped out of the port, continuously and without interruption, for the whole duration of the scanning of the port through a plurality of the segments of the scanning path.
8. The method of clause 7, wherein the material is pumped out of the port at a constant rate for the whole duration of the scanning of the port through said plurality of the segments of the scanning path.
9. The method of clause 7 or 8, wherein the port is moved at a constant speed for the whole duration of the scanning of the port through said plurality of the segments of the scanning path.
10. The method of any of clauses 7-9, wherein:
   a liquid globule of the material expands from the port during time periods in which the port is moving through positions where no material is being added via the port to any body of first liquid; and
   the expansion is such that the globule bridges a gap that would have existed in the absence of the globule between the port and a body of first liquid while the port is moving through positions where material is being added to that body of first liquid.
11. The method of clause 10, wherein the liquid bridge is broken when the port moves away from the body of first liquid to which material was being added, before the port starts adding material to a subsequent body of first liquid along the scanning path.
12. The method of any of clauses 7-11, wherein:
   the port contains an alternating sequence of first liquid globules separated from each other by a third liquid;
   the third liquid is miscible with the second liquid or has substantially the same composition as the second liquid;
   each first liquid globule optionally contains different components suspended or dissolved within the first liquid relative to at least one other first liquid globule, and
   material is pumped out of the port in such a manner that a different one of the first liquid globules is pumped into each of the bodies along the plurality of segments of the scanning path.
13. The method of any of clauses 1-6, wherein the material is sucked into the port, continuously and without interruption, for the whole duration of the scanning of the port through a plurality of the segments of the scanning path.
14. The method of clause 13, wherein a rate of flow into the port is constant for the whole duration of the scanning of the port through said plurality of the segments of the scanning path.
15. The method of clause 13 or 14, wherein the port is moved at a constant speed for the whole duration of the scanning of the port through said plurality of the segments of the scanning path.
16. The method of any of clauses 13-15, wherein an alternating sequence of first liquid globules and second liquid globules are sucked into the port, during the scanning of the port through said plurality of the segments of the scanning path, as the port moves sequentially between positions corresponding to bodies of the first liquid, where first liquid is sucked into the port, and positions in between bodies of the first liquid, where second liquid is sucked into the port, thereby creating a series of globules of the first liquid separated from each other in the port by globules of the second liquid.
17. The method of any preceding clause, wherein a distal end of the port remains below an upper surface of the second liquid during the scanning of the port along the scanning path.
18. The method of any preceding clause, wherein the scanning path is substantially straight.
19. The method of any of clauses 1-17, wherein the scanning path comprises a plurality of substantially straight line portions.
20. The method of any of clauses 1-17, wherein the scanning path comprises a serpentine scan.
21. The method of any preceding clause, wherein the port is moved continuously and without interruption along the whole of the scanning path.
22. The method of clause 21, wherein the port is moved at a constant speed along the whole of the scanning path.
23. The method of any preceding clause, wherein an electric field is generated in a region between the port and said surface of the substrate, the electric field being such as to promote coalescence between material exiting the port and each of the bodies along the scanning path.
24. The method of clause 23, wherein the electric field comprises an alternating electric field.
25. The method of any preceding clause, wherein the bodies of first liquid are in contact exclusively with said surface of the substrate and the second liquid.
26. The method of any preceding clause, wherein the material added to or removed from the bodies of first liquid comprises a liquid.
27. The method of any preceding clause, wherein said surface of the substrate on which the plurality of bodies of first liquid are provided is substantially planar.
28. An apparatus configured to add material to a microfluidic arrangement or an apparatus configured to remove material from a microfluidic arrangement, wherein:
   the microfluidic arrangement comprises a plurality of bodies of a first liquid, each body held in shape predominantly by surface tension on a surface of a substrate, and a second liquid, immiscible with the first liquid, in direct contact with the bodies of first liquid and a portion of the surface of the substrate outside of the bodies of first liquid, covering the bodies of first liquid, and isolating each body of first liquid from each other body of first liquid; and
   the apparatus comprises:
      a scanning device configured to scan a port over the substrate;
      either or both of: a dispensing system configured to pump material out of the port, and an extraction system configured to suck material into the port; and
      a controller configured to:
         control the scanning device so that the port is scanned along a scanning path; and either or both of:
            control the dispensing system to add material via the port to each of at least a subset of said plurality of bodies of first liquid, without changing the shape or size of a footprint on the surface of the substrate of the body of first liquid, during a segment of the scanning path proximate to the body of first liquid, the segment extending from a position before material starts to be added to the body of first liquid to a position after material has finished being added to the body of first liquid; and
            control the extraction system to remove material via the port from each of at least a subset of said plurality of bodies of first liquid, without changing the shape or size of a footprint on the surface of the substrate of the body of first liquid, during a segment of the scanning path proximate to the body of first liquid, the segment extending from a position before material starts to be removed from the body of first liquid to a position after material has finished being removed from the body of first liquid,
         wherein the controller is configured such that the port is moved through a range of positions that are exclusively at a constant distance from the surface of the substrate during each said segment of the scanning path.
29. The apparatus of clause 28, further comprising:
   an electric field generating device configured to generate an electric field in a region between the port and said surface of the substrate.
30. The apparatus of clause 29, wherein the electric field comprises an alternating electric field.
31. A method of adding material to a microfluidic arrangement, wherein:
   the microfluidic arrangement comprises one or more bodies of a first liquid, each body held in shape predominantly by surface tension on a surface of a substrate, and a second liquid, immiscible with the first liquid, in direct contact with the one or more bodies of first liquid and a portion of the surface of the substrate outside of the one or more bodies of first liquid, wherein the second liquid covers the one or more bodies of first liquid, and, where a plurality of the bodies of first liquid are provided, the second liquid isolates each body of first liquid from each other body of first liquid; and
   the method comprises:
      adding material via a port to one or more of the bodies of first liquid; and
   generating an electric field in a region between the port and the surface of the substrate, the electric field being such as to promote coalescence between material exiting the port and the one or more bodies of first liquid.
32. The method of clause 31, wherein the electric field comprises an alternating electric field.
33. An apparatus configured to add material to a microfluidic arrangement, wherein:
   the microfluidic arrangement comprises one or more bodies of a first liquid, each body held in shape predominantly by surface tension on a surface of a substrate, and a second liquid, immiscible with the first liquid, in direct contact with the one or more bodies of first liquid and a portion of the surface of the substrate outside of the one or more bodies of first liquid, wherein the second liquid covers the one or more bodies of first liquid, and, where a plurality of the bodies of first liquid are provided, the second liquid isolates each body of first liquid from each other body of first liquid; and
   the apparatus comprises:
      a dispensing system configured to add material via a port to one or more of the bodies of first liquid; and
      an electric field generating device configured to generate an electric field in a region between the port and said surface of the substrate.
34. The apparatus of clause 33, wherein the electric field comprises an alternating electric field.

## Claims

1. A method of adding material to a microfluidic arrangement or a method of removing material from a microfluidic arrangement, wherein:
the microfluidic arrangement comprises a plurality of bodies of a first liquid, each body held in shape predominantly by surface tension on a surface of a substrate, and a second liquid, immiscible with the first liquid, in direct contact with the bodies of first liquid and a portion of the surface of the substrate outside of the bodies of first liquid, covering the bodies of first liquid, and isolating each body of first liquid from each other body of first liquid; and
the method comprises:
scanning a port along a scanning path during which:
material is added via the port to each of at least a subset of said plurality of bodies of the first liquid, without changing the shape or size of a footprint on the surface of the substrate of the body of first liquid, during a segment of the scanning path proximate to the body of first liquid, the segment extending from a position of the port before material starts to be added to the body of first liquid to a position of the port after material has finished being added to the body of first liquid; or
material is removed via the port from each of at least a subset of said plurality of bodies of the first liquid, without changing the shape or size of a footprint on the surface of the substrate of the body of first liquid, during a segment of the scanning path proximate to the body of first liquid, the segment extending from a position of the port before material starts to be removed from the body of first liquid to a position of the port after material has finished being removed from the body of first liquid,
wherein the port is moved through a range of positions that are exclusively at a constant distance from the surface of the substrate during each said segment of the scanning path.

2. The method of claim 1, wherein said constant distance during each segment of the scanning path is:
larger than a height relative to the surface of the substrate of any body of the first liquid to which material is added during the segment; or
less than a height relative to the surface of the substrate of any body of the first liquid from which material is removed during the segment.

3. The method of any preceding claim, wherein:
material is added to a single one of the bodies of first liquid during each segment of the scanning path; or
material is removed from a single one of the bodies of first liquid during each segment of the scanning path.

4. The method of claim 1 or 2, wherein:
material is simultaneously added to multiple bodies of first liquid during each of one or more of the segments of the scanning path; or
material is simultaneously removed from multiple bodies of first liquid during each of one or more of the segments of the scanning path.

5. The method of any preceding claim, wherein said constant distance is the same for all of the segments of the scanning path.

6. The method of any preceding claim, wherein the material is pumped out of the port, continuously and without interruption, for the whole duration of the scanning of the port through a plurality of the segments of the scanning path, optionally at a constant rate for the whole duration of the scanning of the port through said plurality of the segments of the scanning path.

7. The method of claim 6, wherein:
a liquid globule of the material expands from the port during time periods in which the port is moving through positions where no material is being added via the port to any body of first liquid;
the expansion is such that the globule bridges a gap that would have existed in the absence of the globule between the port and a body of first liquid while the port is moving through positions where material is being added to that body of first liquid; and
the liquid bridge is broken when the port moves away from the body of first liquid to which material was being added, before the port starts adding material to a subsequent body of first liquid along the scanning path.

8. The method of claim 6 or 7, wherein:
the port contains an alternating sequence of first liquid globules separated from each other by a third liquid;
the third liquid is miscible with the second liquid or has substantially the same composition as the second liquid;
each first liquid globule optionally contains different components suspended or dissolved within the first liquid relative to at least one other first liquid globule, and
material is pumped out of the port in such a manner that a different one of the first liquid globules is pumped into each of the bodies along the plurality of segments of the scanning path.

9. The method of any of claims 1-5, wherein the material is sucked into the port, continuously and without interruption, for the whole duration of the scanning of the port through a plurality of the segments of the scanning path, wherein, optionally, a rate of flow into the port is constant for the whole duration of the scanning of the port through said plurality of the segments of the scanning path.

10. The method of claim 9, wherein an alternating sequence of first liquid globules and second liquid globules are sucked into the port, during the scanning of the port through said plurality of the segments of the scanning path, as the port moves sequentially between positions corresponding to bodies of the first liquid, where first liquid is sucked into the port, and positions in between bodies of the first liquid, where second liquid is sucked into the port, thereby creating a series of globules of the first liquid separated from each other in the port by globules of the second liquid.

11. The method of any preceding claim, wherein a distal end of the port remains below an upper surface of the second liquid during the scanning of the port along the scanning path.

12. The method of any preceding claim, wherein the port is moved continuously and without interruption along the whole of the scanning path, optionally at a constant speed along the whole of the scanning path.

13. The method of any preceding claim, wherein an electric field is generated in a region between the port and said surface of the substrate, the electric field being such as to promote coalescence between material exiting the port and each of the bodies along the scanning path, the electric field optionally comprising an alternating electric field.

14. An apparatus configured to add material to a microfluidic arrangement or an apparatus configured to remove material from a microfluidic arrangement, wherein:
the microfluidic arrangement comprises a plurality of bodies of a first liquid, each body held in shape predominantly by surface tension on a surface of a substrate, and a second liquid, immiscible with the first liquid, in direct contact with the bodies of first liquid and a portion of the surface of the substrate outside of the bodies of first liquid, covering the bodies of first liquid, and isolating each body of first liquid from each other body of first liquid; and
the apparatus comprises:
a scanning device configured to scan a port over the substrate;
either or both of: a dispensing system configured to pump material out of the port, and an extraction system configured to suck material into the port; and
a controller configured to:
control the scanning device so that the port is scanned along a scanning path; and either or both of:
control the dispensing system to add material via the port to each of at least a subset of said plurality of bodies of first liquid, without changing the shape or size of a footprint on the surface of the substrate of the body of first liquid, during a segment of the scanning path proximate to the body of first liquid, the segment extending from a position before material starts to be added to the body of first liquid to a position after material has finished being added to the body of first liquid; and
control the extraction system to remove material via the port from each of at least a subset of said plurality of bodies of first liquid, without changing the shape or size of a footprint on the surface of the substrate of the body of first liquid, during a segment of the scanning path proximate to the body of first liquid, the segment extending from a position before material starts to be removed from the body of first liquid to a position after material has finished being removed from the body of first liquid,
wherein the controller is configured such that the port is moved through a range of positions that are exclusively at a constant distance from the surface of the substrate during each said segment of the scanning path.

15. The apparatus of claim 14, further comprising:
an electric field generating device configured to generate an electric field in a region between the port and said surface of the substrate.
